# EUROPEAN PATENT APPLICATION

(11) **EP 4 272 869 A1**
(43) Date of publication of application: **08.11.2023**
(21) Application number: 21916084.3
(22) Date of filing: 14.12.2021
(51) Int. Cl.: B02C 23/06, C04B 7/48, C04B 7/52, B02C 17/00, B02C 19/18, B05B 15/72

(54) **METHOD FOR GRINDING MATERIAL IN A BALL AND DRUM MILL**

(30) Priority: 29.12.2020 UA 202008443
(71) Applicant: Yessaulenko, Sergey Ivanovich, C. Kriukivshchyna, Kyivska oblast, 08136 (UA)
(72) Inventor: Yessaulenko, Sergey Ivanovich, C. Kriukivshchyna, Kyivska oblast, 08136 (UA)
(74) Representative: Koitel, Raivo
(86) International application number: PCT/UA2021/000101
(87) International publication number: WO 2022/146407

(57) **Abstract**

Claimed is an improved method for grinding material in a ball and drum mill, which provides increased efficiency and better quality grinding of the charge material. In said method, particles of a material that are undergoing grinding are treated with a grind intensifier in the form of a cloud of finely dispersed suspended particles, 60% of which have a size of 1-60 µm, inside all of the chambers of the mill by means of a flow of air created by an aspiration system of the mill.

## Description

The invention relates to a field of grinding various materials and it may be used in the most effective way during manufacturing cement and other building materials.

Today cement grinding intensifiers or, as they are also called, surfactants are used in cement industry during manufacturing cement powder. Their addition to a mill during grinding raw materials, in particular, a cement clinker, allows to:
- prolong interrepair periods of the mill owing to removal of electrostatic charge from a surface of particles of the material being ground and avoid their subsequent aggregation which results in adherence of these particles to milling bodies of the mill and eventually in overload of its assemblies;
- reduce energy consumption for milling owing to reduction of hardness of the material being ground (Rehbinder's effect) and avoid adherence of fine particles to the milling bodies of the mill;
- alter cohesion (friction) coefficient between the milling bodies, hunch plate and material, thereby increasing impact force and wear quality of the material;
- increase transportation speed of the material within the mill and circulation in cross section.

A technical effect provided by use of the grinding intensifiers when grinding the raw materials, in particular, the cement clinker, lies in:
- increasing performance of milling assemblies at a given grinding fineness, thereby allowing to reduce specific energy consumption for cement milling down to 2-10 kWt*h/t, as well as maintenance costs of the milling process;
- increasing an assured hardness when increasing the milling fineness at a given performance;
- altering a grain size composition of the cement which may facilitate altering properties such as water segregation, setting time, acceleration of early strength gain;
- increasing operation efficiency of separators in a closed cycle owing to reduction of fraction of the aggregated particles;
- increasing cement flowability (this parameter is especially important in case of transportation of the cement in air slides, operation of pneumatic chamber pumps, extraction of the cement from silos).

All the above-mentioned information indicates that the cement grinding intensifiers essentially affect the grinding process of the raw materials, as well as characteristics of a final product, in particular, of the cement powder.

There are numerous grinding intensifiers which are used in grinding the cement clinker, e.g., propylene glycol, triethanolamine (TEA), naphthenate soap, soap stock, spent sulphite liquor etc. Usage efficiency of the grinding intensifiers depends not only on their composition, but also on a method for their injecting into a chamber of the mill during grinding of the initial material for obtaining the cement powder.

### PRIOR ART

Most often, cement plants have a rather cost-efficient variant of a technological line for grinding the cement clinker which implies no special equipment for feeding the cement grinding intensifier. In this case, the liquid cement grinding intensifier is simply poured onto the cement clinker that is moved by means of a conveyor belt to the mill or all the required volume of the intensifier is poured to a feeding hole of the mill.

A drawback of this method lies in that the intensifier is bound to the cement clinker merely at the beginning of the grinding cycle before entering a first chamber of the mill without entering a second chamber thereof in a free state. This results in falling of an excessive intensifier on the clinker in one place, while it is completely absent in another place. In order to provide a more uniform distribution of the intensifier, it is necessary to increase its amount which would lead to its uneconomical use and deterioration of the cement quality in some cases. For the same reason, as compared to below-mentioned analogues, this method provides a rather low efficiency in case of:
- reduction of electrostatic charges from the particles of the material being ground;
- increase of performance of the mills during cement milling;
- shortening of the specific energy consumption per ton of products being manufactured;
- increase of the grinding fineness;
- improving the cement grading;
- counteracting cement adherence to the milling bodies and liner plates of the mill;
- improving the cement flowability;
- stabilizing the equipment operation modes.

A method for injecting a grinding intensifier is known, in which a final surfactant solution is supplied to a main service tank by gravity, and a capacity of the main service tank is approximately the same as a work unit daily demand for the surfactant. The solution is fed by means of individual gear-type pumps from the service tank, via a collector, to nozzles. A compressed air at a pressure of 2-3 atms is fed to the same location, and the air, by dividing the solution jet in the nozzle, forms a finely dispersed fog-like mixture. A length of the jet coming out of the nozzle and a spray angle at the constant air and solution pressure are adjusted by altering an air annular gap in the nozzle. A control and measurement instrumentation is used to control and to adjust the equipment operation. (Deshko Yu. I. et al, "" 1966, p. 186)

This analogue has a significant advantage over the above-mentioned analogue, since spraying of the intensifier in the form of the fog-like mixture results in that the intensifier interacts with greater volume of the entire material being ground. Usage efficiency of the intensifier is higher due to presence of suspended drops of the surfactant solution in the first chamber of the mill. However, the pressure of feeding the compressed air that divides the solution jet in the nozzle is only 2-3 atms which should be considered as a drawback. This pressure is not sufficient to provide mixing of at least 60% of the entire intensifier solution with the cement clinker being ground in the form of the fog-like mixture. When the solution jet is divided by the compressed air at the pressure of 2-3 atms, a large part of the solution is formed as rather large drops which would immediately fall down at the beginning of the first chamber of the mill due to gravity forces.

Author of the claimed invention believes that the interaction between the grinding intensifier in the form of fine suspended drops and the particles of the raw materials being ground, in particular, with the cement clinker, in all the chambers of the mill provides a maximum effect of use of intensifiers which affects the equipment operation performance, reduction of its energy consumption, reduction of the intensifier consumption, as well as improvement of properties and quality of the final products (cement powder).

A method for injecting a cement grinding intensifier into 2 chambers of a mill simultaneously is known. This method is performed by a device for injecting and spraying a cooling water and surfactants to a multi-chamber tube mill (author's certificate SU 1457994 as of 15.02.1989).

The device comprises 2 pipelines (internal and external) in a feeding part of the mill, the pipelines are arranged one inside another one in an axial fashion. Therewith, the internal pipeline terminates with a nozzle and is intended to inject and spray a surfactant solution to a first chamber of the mill, while the external pipeline is plugged at a front face and a peripheral pipeline having a nozzle for injecting the cooling water to a second chamber is connected to the external pipeline. Both the pipelines rotate together with the mill. The latter is equipped with supports and a flexible member, and it is made as a bearing one. This results in simplification of the structure of the device, in particular, a swivel, and enabling feeding of the surfactant to the second chamber of the mills having greater dimensions.

A drawback of this analogue is that the mentioned method is used only together with said device and implies reconstruction of the mill.

The closest analogue of the claimed technical solution is a method for grinding materials in ball and drum mills that is disclosed in a description of the author's certificate SU 1543627 as of 20.01.1995. The described method comprises injecting a surfactant solution (a grinding intensifier) to the mill by nozzle spraying on certain areas of the mill.

The described method can be used only for certain types of mills which comprise a feeding device having a central hole along the mill axis for injecting the intensifier. Thus, the solution according to the closest analogue implies a certain alteration of the traditional structure of the equipment while expecting to obtain individual local effects.

Most of cement plants have their own line for grinding cement clinker, and the line, most often, comprises at least a ball mill that consists of 2 chambers, where a first chamber has a feeding hole which the cement clinker is fed through, and a second chamber comprises a discharging device for outputting the ground cement clinker. Therewith, a mill aspiration device is located adjacent to the discharging device, and the mill aspiration device provides a constant air flow in two chambers of the mill from the feeding hole to the discharging device, although this is not a direct purpose thereof. In the established manufacturing process, alteration of the technological line structure leads to large financial and time losses, so it appears to be economically irrational in most cases. However, uneconomical electric energy consumption and use of expensive cement grinding intensifiers stimulate to search for ways to resolve these problems for the already existing technological line at any individual cement plant which could allow to resolve all the mentioned problems without alteration of the structure of the elements of the technological line.

The claimed invention is aimed at achievement of this particular technical objective. The author of the claimed invention proposes to provide a method for material grinding that could be used when using most of types of grinding equipment, thereby ensuring increase of its efficiency, grinding quality and overall performance.

The posed objective is achieved by regulation of parameters of a physical state of a substance being treated during its direct use. A method for grinding a material in a drum and ball mill using a sprayed liquid cement grinding intensifier. The essence of the proposal is that spraying of the intensifier is performed by generating a certain cloud of suspended particles of the grinding intensifier, while more than 60% of them have a size of 1-60 µm, and treating the material is performed by distributing the suspended particles of the grinding intensifier within the mill by means of an aspiration air.

The method may be implemented in preferable embodiments as provided below.

The proposed features of the method are best suited for use of a cement clinker as the material to be ground.

Optimal efficiency is achieved when the sprayed grinding intensifier is injected to a feeding hole (device) of the drum and ball mill.

In order to generate and inject the intensifier, preferably, an ultrasonic and/or a hydraulic and/or a pneumatic and/or a mechanical spraying device may be used.

When implementing the method, it is recommended to use a drum and ball mill that consists of at least two chambers which are formed by permeable interchamber partitions in an interior of the mill drum.

A particular distinctive feature of the claimed method as compared to the known prior art analogues is that the spraying is generated during performing the method, and a general portion of the particles of substances must be maintained in a range of a defined micron size (1-60 µm) and not less than a defined concentration (60%).

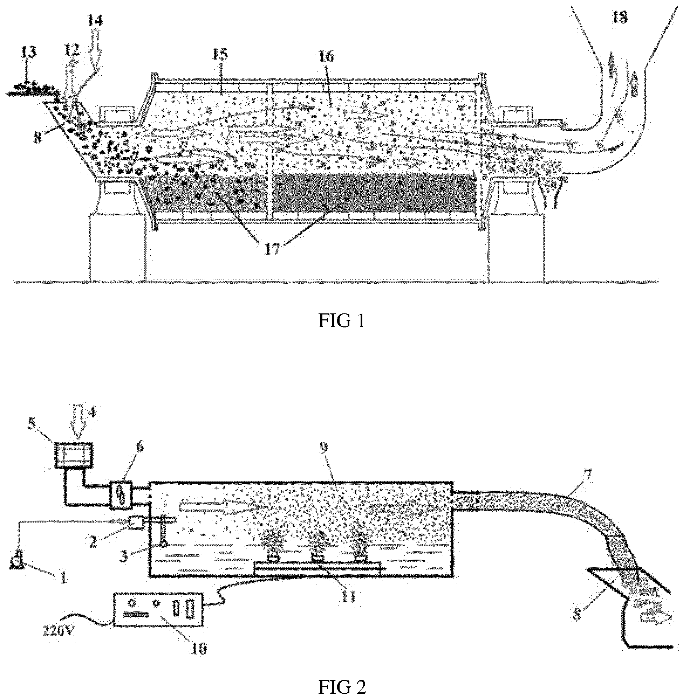

Also, a distinctive feature of the claimed method is that the sprayed surfactant (intensifier) is injected directly to the feeding device (hole) of the mill, while at the same time feeding the material to be ground to the mill. (Fig. 1).

There is a precise cause-and-effect relationship between the set of essential features of the claimed invention and the achieved technical effect.

The proposed size of the particles of the grinding intensifier in the defined concentration allows finely dispersed drops to freely spread through the entire feeding length and to treat the material owing to their light weight. The finely dispersed drops of the intensifier, after they are caught by the aspiration air of the mill, wrap the particles of the raw material being ground in a more uniform fashion, as well as milling bodies (balls) of the mill. Therefore, consumption of the grinding intensifier is notably reduced, grinding quality is increased due to more effective use of the intensifier.

Provision of suspended particles of the intensifier being less than 1 µm is a technically complex, energy-consuming and expensive task that will result in ineffective use of the intensifier due to possible withdrawal of these fine particles from the mill by the aspiration air. Concentration of the intensifier particles of more than 60%, when the size is 1-60 µm, provides its required amount during the entire treatment, while providing stability of the grinding technological process that is established in practice. If the particle size is greater than 60 µm, their mass and, thus, stability of the suspended state will be increased, thereby deteriorating a possibility of their distribution by the aspiration air. Concentration of particles having the size of 1-60 µm may be higher than 60% as well, but it depends on the used type of the intensifier, grinding intensifier spray device, intensifier injection method, and it requires an individual approach in each case.

Adherence to said conditions determines main advantages of the claimed method as compared to the known prior art solutions, where spraying of ready-to-use solutions of the cement grinding intensifier leads to difficulties in controlling both dimensions of the intensifier drops and their distribution in the mill. All the above-mentioned circumstances lead to overconsumption of the treatment grinding intensifier and causes the previously listed drawbacks.

Main element of the cement grinding intensifier injection device for injecting it to the feeding hole of the mill is a cloud generation device for generating a cloud of suspended intensifier particles. One of variants of this device is an ultrasonic device that is made according to the principle of the spraying effect in an ultrasonic fountain. The ultrasonic sprayer is based on an emitting diffuser (that is arranged in a container with a liquid intensifier closed from the top) that consists of a metal-ceramic membrane and a generator. Voltage that is generated by a built-in generator of ultrasonic frequency causes the membrane to oscillate with the frequency of about 2 MHz. The membrane, when it is present in the intensifier solution at a certain level (25 - 40 mm from the surface) forms a minor water column having a height of 10-15 mm above the solution surface (ultrasonic fountain), and drops having a diameter of 1-25 µm actively separate therefrom and form a solid stable intensifier fog. The formed fog (cloud) of the finely dispersed suspended drops of the intensifier is mixed with the air flow that is fed to the container (through an inlet pipe) and discharged outside the container (through an outlet pipe). A standard diameter of the membrane is 20 mm.

One membrane is configured to convert about 250-300 ml of the cement grinding intensifier solution into the fog per hour. The membranes are easily removable.

The device performance can be increased by increasing the number of the emitting membranes. Industrial membrane emitting monoblock unit consists of 10 membranes, consumes about 250 Wt*hour and converts about 3000 ml of the cement grinding intensifier solution into the fog. Increase of the units allows to increase the device performance.

Also, a heater may be embedded into the container with the membrane emitting unit. A task of the heater is as follows: when the intensifier is heated, viscosity and surface tension of the intensifier will be reduced, thereby facilitating greater formation of the cloud of the suspended particles (fog). The heater may be arranged inside the container with the membrane emitting unit, but it also may be made as a separate thermal unit, where the grinding intensifier is heated and then fed in the heated state to the container with the membrane emitting unit.

The material grinding process according to the claimed method will be disclosed in more details using the below-listed figures taking the ultrasonic device as an example of the device for generating and injecting the grinding intensifier in the form of the cloud of the suspended particles.

Fig. 1 is a general diagram of implementation of the method by means of the ball and drum (double-chamber) mill.

Fig. 2 is a diagram of the ultrasonic device that is used to obtain the suspended particles of the grinding intensifier.

Fig. 1 illustrates the exemplary general diagram of the method for grinding materials, as well as individual features of its implementation according to the claimed invention.

The claimed method is implemented as follows. A prepared liquid cement grinding intensifier is fed to a container 9 by means of a pump 1 (Fig. 2) via a pipeline and an electromechanical valve 2. A level of the grinding intensifier in the container is 7-8 cm and it is maintained by means of a level sensor 3 and the electromechanical valve. A membrane emitting unit 11 generates a finely dispersed spray of a surfactant (being the intensifier). An ambient air 4 is pumped by a fan 6 through an air filter 5. The generated cloud of suspended finely dispersed drops of the intensifier that consists of drops having a size of from 1 to 25 µm is picked up by the air 4 and discharged outside the container. Then, the intensifier particles are delivered to a feeding device 8 of a cement mill by means of a flexible pipeline 7.

An electric unit 10 is responsible for electric power supply, automation and alarm.

A portion of the finely dispersed suspended drops of the intensifier 12 (Fig. 1) is immediately mixed with a cement clinker 13 that is fed to the feeding hole of the cement mill 8. In the same way, the remainder of the finely dispersed suspended drops of the intensifier that is picked up by the aspiration air 14 passes further to a first chamber 15 and to a second chamber 16 of the mill with milling balls 17. A source for generating the aspiration air of the mill is an aspiration system 18 that comprises at least 1 discharge fan. The latter creates the air flow 14 that ensures, while passing through the mill, transportation of the suspended finely dispersed particles of the intensifier 12 to the first chamber 15 and to the second chamber 16 of the mill. This allows to combine the suspended finely dispersed particles of the cement grinding intensifier both with large clumps and with fine suspended particles of the material being ground. This particular method for combining the grinding intensifier and the material being ground (the cement clinker, gypsum and other additives) allows to achieve a maximum efficiency of use of the cement grinding intensifier.

Implementation of the method results in the following advantages and technical effect:
- enhancing the grinding intensification process due to injection of the suspended finely dispersed drops of the cement grinding intensifier which allows to increase a mass exchange surface (interfacial surface) between the material being ground and the finely dispersed surfactant drops by more than 10000 times in average as compared to the jet pouring of the grinding intensifier on the clinker surface. increasing the specific surface of the injected surfactant (by 30000 times, when the drop size is 2 µm; by 2000 times, when the drop size is 30 µm);
- enhancing penetration of the finely dispersed drops of the intensifier into microcracks of the material being ground, thereby enhancing a propping effect that facilitates better grinding;
- providing free penetration of the finely dispersed drops of the liquid cement grinding intensifier to the second chamber of the fine grinding mill due to their light weight and picking up by the aspiration air of the mill;
- improving removal of electrostatic charges on the milling bodies and the material being ground due to large number of the finely dispersed drops (from 40 million, when the drop size is 30 µm, and to 130 billion, when the drops have a size of 2 µm per 1 gram of the liquid cement grinding intensifier) and better distribution of the intensifier within the overall volume of the mill;
- in case the intensifier is diluted with water, improving the mill cooling due to evaporation of the aqueous phase of the finely dispersed drops of the intensifier solution during the cement grinding process;
- reducing a load onto the mill during grinding the cement clinker due to reduction of adherence of the finely dispersed particles of the clinker being ground to the milling bodies and liner plates;
- increasing the interrepair period of the mill;
- 8-10% reduction of the electrical energy consumption due to reduction of the load onto the mill which is associated with the adherence of the finely dispersed particles of the clinker being ground to the milling bodies and liner plates;
- reducing the consumption of expensive cement grinding intensifiers by 2-3 times;
- improving the grinding fineness, increasing the specific surface of the cement;
- 10-12% increase of the mill performance.

A device for generating hydraulic or pneumatic spraying, mechanical spraying or hybrids, wherein at least 2 of the above-mentioned options are combined, also may be used as the device for generating the cloud of the suspended intensifier particles (instead of the ultrasonic device).

Sizes of the drop of the cloud of the suspended particles of the grinding intensifier depending on the type of the grinding intensifier generation and injection device:

| Type of the grinding intensifier generation and injection device | Size of the generated drops | |
|---|---|---|
| Ultrasonic device | | 1 - 25 µm |
| Hydraulic spraying device | | 10 - 250 µm |
| Pneumatic spraying device | | 5 - 150 µm |

## Claims

1. A method for grinding a material in a drum and ball mill, the method comprises treating the material with a sprayed liquid cement grinding intensifier, **wherein** spraying is performed by generating a cloud that consists of suspended particles of the cement grinding intensifier, while more than 60% of them have a size of 1-60 µm, and the treatment of the material is performed by distributing the suspended particles of the grinding intensifier within the mill by means of an aspiration air.

2. The method according to claim 1, **wherein** a cement clinker is used as the material for grinding.

3. The method according to claim 1, **wherein** a mixture of the grinding intensifier and water is used as the cement grinding intensifier.

4. The method according to claims 1-3, **wherein** the sprayed grinding intensifier is injected into a feeding hole of the drum and ball mill.

5. The method according to any one of the preceding claims, **wherein** an ultrasonic and/or a hydraulic and/or a pneumatic and/or a mechanical spraying device is used for generating and injecting the grinding intensifier.

6. The method according to any one of the preceding claims, **wherein** it comprises using the ball and drum mill that consists of at least two chambers which are formed by permeable interchamber partitions in an interior of the mill drum.
